# EUROPEAN PATENT APPLICATION

(11) **EP 3 837 968 A1**
(43) Date of publication of application: **23.06.2021**
(21) Application number: 19218121.2
(22) Date of filing: 19.12.2019
(51) Int. Cl.: A01G 31/06, A01G 31/02, A01G 9/00, A01G 9/029

(54) **INDOOR PLANT CULTIVATION SYSTEM**

(71) Applicant: Leaf Learn s.r.o., 18600 Praha 8 (CZ)
(72) Inventor: Mazura, Pavel, 63400 Brno (CZ); Spichal, Lukas, 77900 Bystrocice (CZ); Lamplot, Zbynek, 79824 Skalka (CZ); De Diego Sanchez, Nuria, 77900 Bystrocice (CZ)
(74) Representative: Hartvichova, Katerina

(57) **Abstract**

The present invention provides an indoor plant cultivation device comprising at least one cultivation unit, wherein said cultivation unit contains:
- a rack with at least one position fixing element for receiving and positioning a plant cultivation capsule;
- a support on which at least one imaging device is mounted;
- at least one plant cultivation capsule positioned within or using the at least one position fixing element wherein the plant cultivation capsule is provided with at least one computer-readable code positioned to be readable by the imaging device at least during the initialization of cultivation and with at least one computer-readable color standard positioned to be readable by the imaging device for image calibration purposes, and wherein the plant cultivation capsule contains a water-holding layer, a water-guiding layer, and a plant-seed containing layer;
- data transmission means.

The invention further provides a plant cultivation system and a method of plant cultivation using this device; as well as a plant cultivation capsule suitable for use with this device.

## Description

### Field of Art

The present invention relates to the field of indoor plant cultivation systems.

### Background Art

Systems for indoor plant cultivation are known, and they typically contain cultivation vessels, pumps and distribution systems for watering, and light sources, some of them further contain sensors with connected through a feedback loop or a processor to the light sources and watering systems. US 10,104,846 describes a representative system for plant cultivation with automatic regulation.
US 20060272210 describes a smart device for hydroponics growing systems, which comprises a cultivation vessel, timer, light, and a means for determining, receiving, sending or processing data regarding the status of a component or characteristic of the hydroponics device. The device reminds the user to take the necessary actions (addition of nutrients etc.) based on a pre-programmed cycle. The pre-programmed cycle may be loaded in the device processor or in an external processor.
CN102740681 discloses a plant cultivation system which contains a cultivation rack with cultivation vessels, light sources with a light control unit, and an observation apparatus, which predicts the day of harvest of the plant. However, the user still has to take care of the plants.

The known systems still require an active follow up and active steps by the user, such as watering, observing, providing nutrients etc. This is too time consuming for some private users, and too burdening in case of production of fresh microgreens directly in restaurants.
The present invention aims at providing a device which, apart from the step of initializing a cultivation, does not require any further active steps from the user, and which allows the user to reliably determine in advance the day of harvest.

### Disclosure of the Invention

The present invention provides an indoor plant cultivation device comprising at least one cultivation unit, wherein said cultivation unit contains:
- a rack with at least one position fixing element for receiving and positioning a plant cultivation capsule;
- a support on which at least one imaging device is mounted;
- at least one plant cultivation capsule positioned within or using at least one position fixing element wherein the plant cultivation capsule is provided with at least one computer-readable code positioned to be readable by the imaging device at least during the initialization of cultivation and with at least one computer-readable color standard positioned to be readable by the imaging device for image calibration purposes, and wherein the plant cultivation capsule contains a water-holding layer, a water-guiding layer, and a plant-seed containing layer;
- data transmission means.

The rack may contain one or a plurality of position fixing elements adapted to receive or to fix a plant cultivation capsule. Typically, the rack contains 2 to 40 position fixing elements adapted to receive 2 to 40 plant cultivation capsules. For a household use, the rack may in some embodiments contain 1 to 10 position fixing elements, more specifically 2, 4, 6, 8 or 10 position fixing elements.

The position fixing elements are configured to ensure that the capsule is held in a pre-determined spot, so that a reliable observation by the imaging device is achieved. In some embodiments, the position fixing elements are recesses and/or protrusions. The recesses may be recesses for receiving the outer shape of the capsule, or recesses for receiving protrusions formed on the capsule. The protrusions may be configured to fit recesses formed in the capsule.

The position fixing element (such as a recess) for receiving a plant cultivation capsule is preferably shape-adapted to the shape of capsule, in order to hold the capsule in a pre-determined position.

The rack may be configured to be detachable and removable from the rest of the device.

The support is positioned in relation to the rack so that the at least one imaging device images the content of all positions defined by position fixing elements (such as recesses or protrusions) in the rack. The one or more imaging devices may image the content of all positions defined by position fixing elements in one image or in a plurality of separate images. To this end, the imaging device(s) is(are) preferably mounted movably on the support.

When the cultivation device contains more than one cultivation unit, the cultivation units can be positioned on top of each other, and the lower side of one rack may act as a support for the imaging device for the rack positioned just below the said rack.

In some embodiments, the support has at least one portion which is parallel to the rack. The light source(s) and the imaging device(s) are mounted on this parallel portion. Apart from the parallel portion, the support has at least one portion connecting the parallel portion with the rack. Typically, this connection portion is substantially perpendicular to the parallel portion. Preferably, the connecting portion(s) and the parallel portion are formed integrally (i.e., as one piece) and fixedly or removably mounted to the rack.

In some embodiments, at least one light source is mounted to the support. The light source is position on the support in relation to the rack so that the one or more light sources emit light towards the rack. The light source(s) may be mounted movably on the support.

In some embodiments, at least one sensor is mounted on the support, said sensor being selected from temperature sensors, light sensors, humidity sensors.

The light source is preferably configured to emit light with a wavelenght and intensity suitable for plant growing. Suitable light sources include LED, HPS (high pressure sodium) or fluorescent lamps.

The imaging device is preferably an imaging device capable of imaging in VIS range of spectra (such as a camera). The optics of the imaging device (such as a camera) should preferably cover wide angles to be able to capture the rack area from short distance. A short distance (such as 5 to 50 cm) between the imaging device (such as a camera) and the cultivation capsule ensures a good QR code readibility and image quality for analysis.

The data transmission means collects and transmits/sends the data collected by the imaging device(s) and by the sensor(s) (if present). The data are transmitted/sent to a receiving device which may be a mobile phone of the user, or it may be a distant server. The data transmission means may further include means for inbound transmission, i.e., receiving of data. The received data may be data for controlling the cultivation unit, the light source(s), the imaging device(s) and the sensor(s).

The data transmission means may include a Bluetooth transmitter, a Wi-Fi transmitter, LAN connection, GSM connection.

The indoor plant cultivation device is typically equipped with a source of electrical energy, such as a solar cell, a battery, or an accumulator; or contains means for connecting into an electrical network.

In one aspect, the present invention provides a plant cultivation capsule which is provided with at least one computer-readable code positioned to be readable by the imaging device at least during the initialization of cultivation and with at least one computer-readable color standard positioned to be readable by the imaging device, for image calibration purposes, and wherein the plant cultivation capsule contains, from bottom to top, a water-holding layer, a water-guiding layer, and a plant-seed containing layer. Further layers may be present, provided that they allow water to be transported from the water-holding layer to the plant-seed containing layer. The plant cultivation capsule is sealed by a sealing film.

In particular embodiments, the water-holding layer contains or consists of a material providing a good support for growing plant roots with an appropriate balance between water and air content. The material of the water-holding layer should have a porosity of at least 10%. Suitable materials include natural fibers such as coconut coir, jute, linen, hemp; or rockwool, wood shavings, peat, matting, sponge.

The water-guiding layer contains or consists of highly hydrophilic materials such as paper, filter paper, polyester, rayon, and cotton fibres such as gauze. The material of the water-guiding layer should have absorption capacity for water of at least 10 g water/1 g of the material.

The seed-containing layer contains a seed-fixing substrate such as a cotton-based material or a cotton wool with attached or incorporated seeds. The seeds can be fixed using composition comprising a binding agent selected from the class of vinyl acrylic emulsions, partially hydrolyzed copolymers of vinyl chloride and vinyl acetate, polyvinyl alcohols, polyvinyl acetates, drying oil modified polyurethanes, vinyl toluene copolymer modified drying oils, 23 percent penta soya oil alkyd, pinene polymer hydrocarbon resins, chain stopped alkyds, chlorinated rubber, epoxy esters, acrylics, modified polyacrylamides, self-curing carboxylated styrene butadiene latex, polyvinyl pyrrolidone, poly (methyl vinyl ether/maleic anhydride), vinyl pyrrolidone/dimethylamino ethylmethacrylate copolymer, and vinyl pyrrolidone/vinyl acetate copolymer. This allows achieving an optimal distribution of the seeds across the growing surface of the plant cultivation capsule.

Any or all of the layers contained in the capsule may be loaded with nutrients, fertilizers, plant growth regulators, biostimulants, fungicides, pesticides, for supporting the growth of the plant seeds and plants and/or for protecting the plants against pests.

The plant cultivation capsule typically has a rectangular shape. The sealing film may have a resealable portion (opening) allowing the user to pour water which directly accesses the water-holding layer. The resealable portion corresponds to at most 20 % of the area of the sealing film, more preferably to at least 15% or at least 10%. Alternatively or additionally, the sealing film may have a designated spot to be perforated for allowing the user to pour water (e.g., by means of a funnel) which directly accesses the water-holding layer.

In some embodiments, the bottom of the capsules (the bottom is the side which is opposite the sealing film) contains at least three, preferably four or more, structures which are formed as recesses from the outer side and protrusions from the inner side of the bottom of the capsule. Such structures may be used as counterpieces to position fixing elements, if desired, and they can also be used for holding the water-holding layer at a distance above the bottom of the capsule.

Preferably, the capsules are stackable (after removal of the layers of cultivation supports) in order to reduce the volume of waste or to allow recyclability.

Typically, the plant cultivation capsule is made of plastic. Suitable recyclable plastics preferably include polyvinyl chloride (PVC), polyethylene terephthalate (PET). For environmentally friendly applications, biodegradable or compostable materials such as polylactic acid (PLA) can be used. The sealing film is preferably made of plastic or paper and tightly but removably sealed to the edges of the capsule.

The computer-readable code is preferably selected from a barcode or a smart code (QR code). The computer-readable code contains at least information about the plant seeds contained in the capsule on which the computer-readable code is placed, preferably also data about the production date of the capsule. In some embodiments, the computer-readable code contains a unique identification of the plant cultivation capsule - this prevents production and use of counterfeits.

The plant cultivation capsule thus contains a specifically designed sandwich of cultivation layers and seeds for proper growing of edible plants, such as microgreens, baby greens, sprouts, spices, herbs, leafy and salad vegetables, podded vegetables, bulb and stem vegetables, root and tuberous vegetables, fruits, ornamental plants, crops and mushrooms. The capsule design enables optimal water and air exchange management in root space of the plants. The capsule design enables easy watering in the starting period of the cultivation. The capsules typically do not require further watering during the cultivation period.

Further, the present invention provides an indoor plant cultivation system comprising the indoor plant cultivation device of the present invention; at least one database containing images and data for past cultivations of the same plant species; and data processing means configured to compare the images and optionally further data obtained from the data transmission means with images and data for past cultivations of the same plant species stored in the database and to assess plant health, plant growing parameters and to determine the day of harvest. The data processing means may typically be a component of a distant server or a component of the user's mobile phone, or it may be embedded in the indoor plant cultivation device.

The database contains data about past cultivations (including images, data from the sensors, if present, and data about the progress of the past cultivations) and data about the progress of the on-going cultivation(s), i.e., data collected in different points of time of the on-going cultivation(s). The data may include the data from the imaging device(s), the data from the computer-readable code from the capsule, and the data from sensor(s), if sensors are present. The database further preferably contains data about produced plant cultivation capsules, allowing to associate any QR code from any (original) capsule with the data about the capsule.

The database may be located on the distant server, in a memory of the cultivation unit, or in an independent database space such as a cloud.

In some embodiments, the data processing means are located in the user's mobile phone and the database is located in a cloud which is accessible (for both sending and receiving data) through a mobile application installed on the user's mobile phone.

The present invention further provides a method for indoor cultivation of plants by a user, using the plant cultivation device and system of the invention, comprising the following steps:
- providing an indoor plant cultivation device with at least one plant cultivation capsule;
- providing a mobile application on user's mobile phone;
- reading the computer-readable code from the plant cultivation capsule by means of the user's mobile phone or by means of an imaging device and uploading the information from the computer-readable code to the mobile application and/or to a database;
- removing a resealable portion of a sealing film of the plant cultivation capsule or perforating the sealing film at a designated spot, thus forming an opening in the sealing film, and pouring a pre-determined amount of water which is sufficient to support the plants until they are harvested into the plant cultivation capsule through the opening; and maintaining the capsule for a germination period of the contained seeds;
   removing the sealing film from the plant cultivation capsule after germination period (typically about 2 days), preferably including providing a prompt to remove the sealing film to the user through the mobile application;
- placing the plant cultivation capsule within or using a position fixing element in a rack of the indoor plant cultivation device;
- optionally emitting light from light source(s) of the indoor plant cultivation device on the plant cultivation capsule.
- collecting images of the plant cultivation capsule in regular intervals by means of an imaging device of the indoor plant cultivation device, and optionally collecting further data, such as temperature and/or light and/or humidity data, by means of sensors; and transmitting the collected data to the mobile application or to the database and/or data processing means;
- comparing the images and optionally further data with images and data for past cultivations of the same plant species stored in the database in order to assess plant health, plant growing parameters and to determine the day of harvest;
- in regular intervals or upon user's request, informing the user through the mobile application about at least one of: the plant health, plant growing parameters and the estimated day of harvest of the plants within the plant cultivation capsule.

The step of comparing the images and optionally further data with images and data from past cultivations of the same plant species stored in the database in order to assess plant health and to determine the day of harvest may be performed by artificial intelligence or neural network systems. These systems are trained on data from past cultivations and days of harvest for these past cultivations, and they can be continuously trained using the data coming to the database from the users.

The cultivated plants are preferably microgreens. Microgreens are plant forms in early development up to the stage of first true leaves. Microgreen plants are well-known for their high nutrition and vitamins content as well as reach taste and other culinary values including ornamental values of some colorful varieties.
Many edible plants, such as baby greens, sprouts, spices, herbs, leafy and salad vegetables, podded vegetables, bulb and stem vegetables, root and tuberous vegetables, fruits, ornamental plants and crops can be grown and used as microgreens. Microgreens most notably include species such as Abelm Abelmoschus esculentus, Abelmoschus moschatus, Acmella oleracea, Adansonia spp., Aframomum exscapum, Aframomum citratum, Aframomum danielli, Aframomum melegueta, Achillea millefolium, Alkanna tinctoria, Allium × proliferum, Allium ampeloprasum (ampeloprasum), Allium ampeloprasum (kurrat), Allium ampeloprasum (sectivum), Allium cepa (aggregatum), Allium fistulosum, Allium hypsistum, Allium porrum, Allium sativum, Allium schoenoprasum, Allium tricoccum, Allium tuberosum, Allium wakegi, Alpinia galanga, Alpinia officinarum, Amaranthus cruentus, Amomum costatum, Amomum subulatum,Amorphophallus paeoniifolius, Anethum graveolens, Angelica archangelica, Anthriscus cerefolium, Apios americana, Apium graveolens, Arachis hypogaea, Arctium lappa, Armoracia rusticana, Arracacia xanthorrhiza, Artemisia absinthium, Artemisia dracunculus, Artemisia spp., Asparagus officinalis, Athyrium esculentum, Atriplex hortensis, Avena sativa, Backhousia citriodora, Backhousia myrtifolia, Bambusa vulgaris, Barbarea verna, Basella alba, Benincasa hispida, Berberis spp., Berberis vulgaris, Beta vulgaris cicla (flavescens), Beta vulgaris maritima, Beta vulgaris vulgaris, Bixa orellana, Borago officinalis, Brassica juncea, Brassica napus (napobrassica), Brassica nigra, Brassica oleracea (acephala), Brassica oleracea (capitata), Brassica oleracea (gemmifera), Brassica oleracea (gongylodes), Brassica rapa (alboglabra), Brassica rapa (chinensis), Brassica rapa (nipposinica), Brassica rapa (pervidis/komatsuna), Brassica rapa (rapifera), Brassica rapa (rosularis), Brassica rapa rapa, Brassica spp., Cajanus cajan, Calamintha nepeta, Calamintha spp., Camassia spp., Canella winterana, Canna spp., Capparis spinosa, Capsella bursa-pastoris, Capsicum annuum, Capsicum frutescens cultivar, Capsicum chinense, Capsicum spp., Carthamus tinctorius, Carum carvi, Cassia vera, Celosia argentea, Ceratonia siliqua, Cicer arietinum, Cichorium endivia, Cichorium intybus, Cichorium spinosum, Cinnamomum aromaticum, Cinnamomum burmannii, Cinnamomum loureiroi, Cinnamomum tamala, Cinnamomum verum, Cinnamomum zeylanicum, Citrullus lanatus, Claytonia perfoliata, Cleome viscose, Cnidoscolus aconitifolius aconitifolius, Coccinia grandis, Coix lacryma-jobi, Colocasia esculenta, Conopodium majus, Cordyline fruticosa, Corchorus capsularis, Corchorus olitorius, Coriandrum sativum, Crambe maritima, Crassocephalum spp., Crithmum maritimum, Crocus sativus, Cucumis anguria, Cucumis sativus, Cucurbita pepo, Cucurbita spp., Cuminum cyminum, Curcuma longa, Curcuma zedoaria, Cyamopsis tetragonoloba, Cymbopogon citratus, Cymbopogon citratus, Cymbopogon flexuosus, Cymbopogon spp., Cynara cardunculus, Cyperus esculentus, Cyperus spp., Daucus carota, Digitaria exilis, Digitaria iburua, Dioscorea spp., Dysphania mbrosioides, Eleocharis dulcis, Elettaria cardamomum, Eleusine coracana, Ensete ventricosum, Epilobium parviflorum, Eragrostis tef, Eruca sativa, Eryngium foetidum, Etlingera elatior, Eucalyptus dives, Eucalyptus olida, Eucalyptus staigeriana, Fagopyrum esculentum, Fernaldia pandurata, Ferula assafoetida, Foeniculum vulgare, Galium odoratum, Gaultheria procumbens, Geum urbanum, Glycine max, Glycyrrhiza glabra, Gnaphalium spp., Gynostemma pentaphyllum, Helianthus annus, Helianthus spp., Helianthus tuberosus, Helichrysum italicum, Hemerocallis fulva, Heracleum persicum, Hordeum pusillum, Hordeum vulgare, Houttuynia cordata, Houttuynia cordata, Hypochaeris radicata, Hyssopus officinalis, Chenopodium album, Chenopodium berlandieri, Chenopodium bonus-henricus, Chenopodium quinoa, Chrysanthemum coronarium, Illicium verum, Inula crithmoides, Ipomoea aquatica, Ipomoea batatas, Iris florentina, Iris germanica, Iris pallida, Iva annua, Jasminum spp., Juniperus communis, Lablab purpureus, Lactuca sativa, Lactuca sativa (asparagina), Lactuca spp., Lathyrus sativus, Lathyrus tuberosus, Laurus nobilis, Lavandula spp., Lens culinaris, Lepidium sativum, Leptotes bicolor, Levisticum officinale, Limnophila aromatica, Lippia citriodora, Luffa cylindrica, Lupinus mutabilis, Macrotyloma uniflorum, Malva spp., Malva verticillata, Manihot esculenta, Melissa officinalis, Mentha piperata, Mentha spicata, Mentha spp., Momordica charantia, Moringa oleifera, Mucuna pruriens, Murraya koenigii, Myristica fragrans, Myrrhis odorata, Nardostachys grandiflora, Nardostachys jatamansi, Nasturtium officinale, Nelumbo nucifera, Nepeta cataria, Nigella sativa, Ocimum × citriodorum, Ocimum basilicum, Ocimum basilicum var. thyrsiflora, Ocimum tenuiflorum, Olea europaea, Opuntia ficus-indica, Orchis mascula, Origanum heracleoticum, Origanum majorana, Origanum spp., Origanum vulgare, Ornithogalum pyrenaicum, Oryza sativa, Pachyrhizus ahipa, Pachyrhizus erosus, Pandanus amaryllifolius, Pandanus odoratissimus, Panicum miliaceum, Papaver somniferum, Pastinaca sativa, Pennisetum glaucum, Perilla frutescens, Petroselinum crispum, Peumus boldus, Phalaris caroliniana, Phaseolus acutifolius, Phaseolus coccineus, Phaseolus lunatus, Phaseolus spp., Phaseolus vulgaris, Phyllostachys edulis, Physalis philadelphica, Phytolacca americana, Pimenta dioica, Pimpinella anisum, Piper borbonense, Piper cubeba, Piper longum, Piper nigrum, Pissum spp., Pistacia lentiscus, Pisum sativum, Pisum sativum (macrocarpon), Pisum sativum (saccharatum), Plantago major, Plectranthus amboinicus, Polygonum erectum, Polygonum hydropiper, Portulaca oleracea, Praecitrullus fistulosus, Prunus mahaleb, Pseudowintera colorata, Psophocarpus tetragonolobus, Psoralea esculenta, Pteridium aquilinum, Quassia amara, Raphanus sativus, Rhus coriaria, Ricinodendron heudelotii, Rorippa nasturtium-aquatica, Rumex acetosa, Rumex acetosella, Sagittaria latifolia, Salvia officinalis, Salvia sclarea, Sambucus spp., Sanguisorba minor, Sassafras albidum, Satureja hortensis, Satureja montana, Scorzonera hispanica, Secale cereale, Secalotriticum spp., Sechium edule, Setaria italica, Schinus molle, Schinus terebinthifolius, Silene inflata, Sinapis alba, Sium sisarum, Smallanthus sonchifolius, Smyrnium olusatrum, Solanum centrale, Solanum lycopersicum, Solanum melongena, Solanum tuberosum, Sorgum bicolor, Spinacia oleracea, Stachys affinis, Stellaria spp., Syzygium anisatum, Syzygium aromaticum, Syzygium polyanthum, Tagetes minuta, Talinum fruticosum, Tanacetum balsamita, Taraxacum officinale, Tasmannia lanceolata, Tasmannia stipitata, Telfairia occidentalis, Tetragonia tetragonioides, Thymus citriodorus, Thymus serpyllum, Thymus vulgaris, Tilia spp., Tragopogon porrifolius, Trachyspermum ammi, Trapa bicornis, Trapa natans, Trigonella caerulea, Triticum aestivum, Triticum durum, Triticum monococcum, Triticum spp., Tropaeolum tuberosum, Ullucus tuberosus, Umbellularia californica, Valerianella locusta, Vanilla planifolia, Veronica beccabunga, Vicia faba, Vigna acontifolia, Vigna angularis, Vigna mungo, Vigna radiata, Vigna umbellata, Vigna unguiculata, Vigna unguiculata unguiculata, Vitis spp., Wasabia japonica, Xylopia aethiopica, Zanthoxylum piperitum, Zea mays, Zingiber officinale, Zizania latifoliaoschus esculentus.
Growing microgreens is popular and there is a large community of enthusiasts experimenting with home growing of microgreens. Due to high value of microgreen product several companies is trying to grow microgreens on commercial basis.
Both groups of growers report major challenges in microgreens production. Microgreens grow very fast and because of the early stage of development they are fragile and very sensitive to growing conditions. For growing microgreens the device of the present invention provides seeds, growing substrates and growing light. The device is equipped with imaging device(s) for plant color and shape measurements, and preferably with environment sensors for temperature and humidity measurements.

The device, system and method of the present invention allows to cultivate plants, in particular microgreens, with only initial actions taken by the user. The user is informed about the growing status and the estimated day of harvest which facilitates meal planning for the user. If the user is a restaurant cook, such information is of utmost importance for planning daily menus.

### Brief description of Drawings

Figures 1 and 2 represent schematic axonometric views of an example of the indoor plant cultivation device.
Figure 3 represents a schematic axonometric view of a closed plant cultivation capsule.
Figure 4 represents a schematic axonometric view of an open plant cultivation capsule, without cultivation substrates.
Figure 5 represents a schematic axonometric view of the bottom of a plant cultivation capsule.
Figure 6 represents a sectional view of a plant cultivation capsule with cultivation substrates.
Figure 7 represents schematically one example of an arrangement and communication of the plant cultivation system. Arrows represent data exchange.

### Detailed Description of Preferred Embodiments

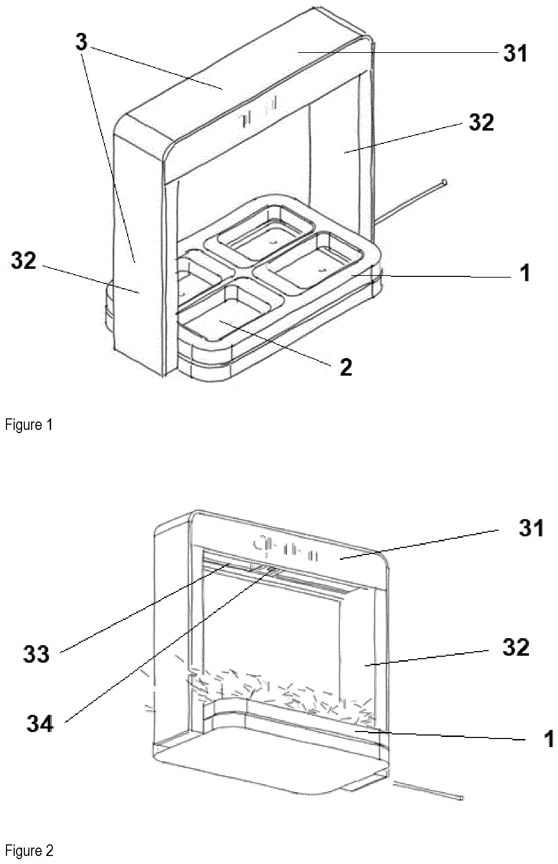

An example of the device of the present invention is described with reference to the figures.
The device shown in Figures 1 and 2 comprises one cultivation unit, which contains a rack 1 with four recesses 2 for receiving and positioning plant cultivation capsules. The rack is configured to be detachable and removable from the device to serve as a platter for capsules. The recesses 2 are shape-adapted to the shape of capsules (see Figure 2 for a capsule), in order to hold the capsules in pre-determined positions.

The device further comprises a support 3 on which one imaging device is mounted. The imaging device is a camera 34 mounted on the lower side of the support 3.
The support 3 is positioned in relation to the rack 1 so that the imaging device images the content of all recesses 2 in the rack 1 in one image. The support 3 has one portion 31 which is parallel to the rack 1. A light source 33 and the imaging device 34 are mounted on this parallel portion 31. Apart from the parallel portion 31, the support has two portions 32 connecting the parallel portion 31 with the rack 1. These connection portions 32 are perpendicular to the parallel portion 31. The connecting portions and the parallel portion are removably mounted to the rack. The light source 33 is positioned on the support in relation to the rack so that the light sources emit light towards the rack.
The light source 33 is LED emitting light.
The imaging device is a camera 34 imaging in the visible (VIS) range of spektra. The optics of the camera covers wide angles to be able to capture the rack area from short distance. The camera may be connected to a minicomputer providing device control, temporary image storage and data transmission. Data collected by the imaging device and/or by the minicomputer are transmitted/sent to a distant server via Wi-Fi technology.
The indoor plant cultivation device contains means for connecting into electrical network.

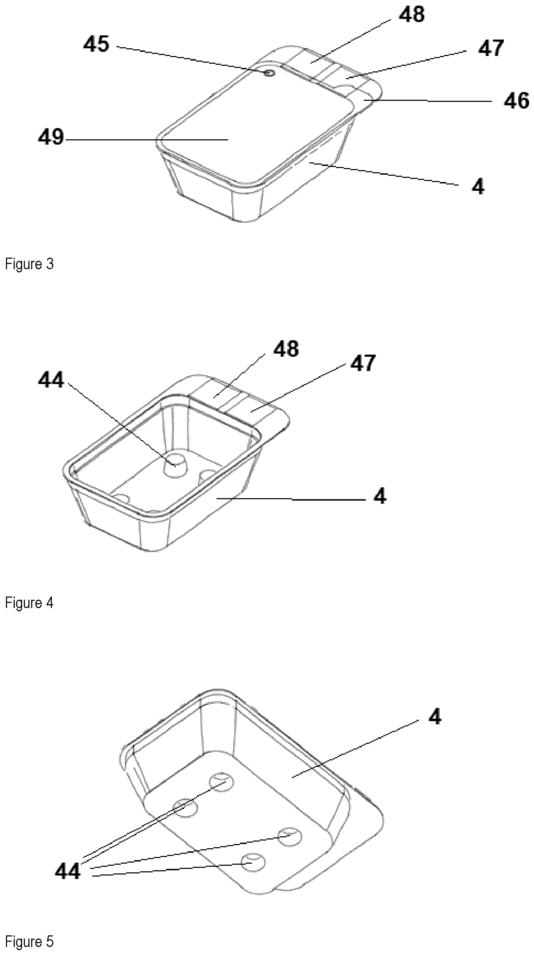

The plant cultivation capsule 4 (Figures 3-6) has a rectangular shape. Four plant cultivation capsules can be positioned within the recesses of the device as shown in Figures 1-2. The plant cultivation capsules 4 are provided with computer-readable QR codes 48 positioned to be readable by the imaging device during the initialization of cultivation and during the whole cultivation peiod. The plant cultivation capsule 4 is provided with a computer-readable color standard 47 positioned to be readable by the imaging device for image calibration purposes. The plant cultivation capsule 4 is sealed by a sealing film 49. The sealing film has, in the depicted embodiment, a designated spot 45 for perforation, and a gripping part 46 for gripping the sealing film upon its removal.
The plant cultivation capsule is provided with structures 44 which are protrusions as seen from the inside of the capsule and recesses as seen from the outside of the capsule.

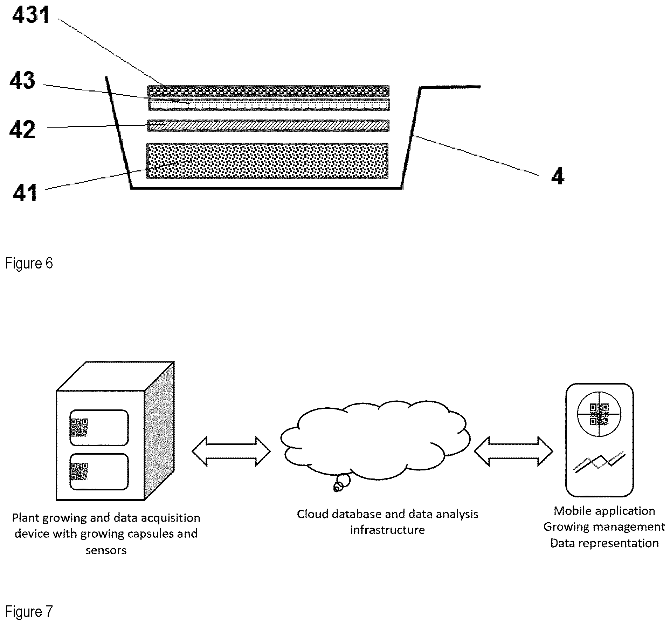

Each plant cultivation capsule 4 (Figure 6) contains a water-holding layer 41, a water-guiding layer 42, and a plant-seed containing layer 43.
The water holding layer 41 is located on the bottom of the capsule. The bottom of the capsule is shaped in a way to form protrusions supporting water-holding layer. The water-holding layer 42 is made of jute matting. The water-guiding layer 43 is made of filter paper. The plant-seed containing layer is made of a cotton sheet with plant seeds 431 fixed to the cotton sheet using a food packaging adhesive. The plant cultivation capsule is sealed by a sealing film. The outer surface of the sealing film provides information about seed type and cultivation procedure. The sealing film has a resealable portion (opening) allowing the user to pour water which directly accesses the water-holding layer using a tapered funnel to pierce through the seal of the capsule. The capsules are stackable to reduce the volume of waste or to allow recyclability.
In one specific embodiment, the plant cultivation capsule 4 is made of PLA material. The sealing film 49 is made of paper and tightly but removably sealed to the edges of the capsule using food packaging adhesive.

In one specific example of the cultivation procedure using a system schematically shown in Figure 7, four plant cultivation capsules, containing rocket, radish, broccoli and cress (each capsule contains a one type of microgreen), are used. The user downloads a mobile phone application for controlling the device and the cultivation process. The user scans QR codes from the plant cultivation capsules, the information from the QR codes serves to identify the capsules (at least the microgreen species contained in the capsule, but in a preferred embodiment also the specific capsule) in a database located in the cloud. The data from the QR code serve to, e.g., identification of the capsule in the cloud database, verification of the origin of the capsule, and linking to data about the relevant growing procedure and seed batch. The identified capsules may appear in the list of microgreens grown by the relevant user in his mobile phone application.
The sealing films are partially removed or perforated, and a pre-determined amount of water (e.g., 100-300 ml, preferably about 200 ml) is poured into each capsule. The capsules are left for a pre-determined amount of time (e.g., 3 days) in the dark, for the seeds to germinate.
After the germination period, the sealing film is removed from all capsules, and the capsules are transferred into the plant cultivation device. The imaging device scans the QR codes from the capsules, and verifies the capsules in the cloud database.
During the development and growing of the plants, the imaging device captures images of the plants in regular intervals (e.g., each hour), and transmits the data to the cloud database. Using the data processing means, the growing characteristics are determined. The results are transmitted to the mobile application and presented graphically to the user, e.g., in the form of status icons, graphs, or messages.
The data processing means also determine the day of harvest, based on the growth characteristics. The user is informed about the estimated day of harvest through the mobile application.
After harvesting the microgreens, the capsules are removed from the device and the QR codes can be scanned to sign off the capsules from the system.

The data processing means use a raw picture of a segment of the plant cultivation device as an input. The capsules have fixed positions within such segment, due to the position fixing means. A QR code has a fixed position on the capsule.
The data processing means generally preferably perform at least the following steps:
- reduction of fish eye lens distortion in the image;
- splitting the segment image into sectors, identifying objects in the sectors;
- localization of QR codes in the segment;
- QR code reading segment-wise;
- QR code reading sector-wise;
- localization of microgreens in the segment;
- splitting the segment into sectors based on identified objects
- processing sector images for visualization in the application.
- segmentation of biomass for microgreen localization and growing characteristics calculation;
- localization of region of interest (ROI, region within the microgreen image suitable for statistical analysis), for example by transformation of the images into several colour spaces;
- calculation of growth statistics as a standardized proportion of active pixels in ROI;
- calculation of developmental stage of the plants (evaluation based on neuronal network model).

The neural networks to be used may be, for example, Convolutional Neural Networks, which are typically used for processing of image data. Residual Neural Networks can also be used, which perform best results in a field of Deep Learning methods for image data nowadays. These models exploit typical techniques like batch normalization, dropout regularization, skip connections, ReLu nonlinearities. These deep Neural Networks consist of many layers, in these layers important patterns are identified for correct prediction/classification.

User interaction with the system is through a mobile application. For example, the application provides list of capsules currently germinating or growing, schematic view of the device with capsules and their growing status shown with icons and QR scanning utility for registration/unredistration of new capsules. The user can see actual image of growing capsule or time-lapse sequence as well as detailed information of growing state, growing graph and estimation of harvest time. Detailed descriptions of microgreens species and their nutritional composition may also be provided.

In some preferred embodiments, the following procedures may be performed by data processing means:

### Cultivation device registration (initial setup of the system):

After the user obtains the plant cultivation device, it needs to be configured properly and connected to the user account within the cloud platform. The connection configuration of the device is done by a web or mobile interface that may be served, e.g., via local wifi connection after the device is plugged into the electricity or its battery is switched on. The web or mobile interface consists of a form where the wifi configuration is entered. After successful form submission, the device verifies the wifi connection configuration. In the case of a positive result, the device connects to wifi and starts communication with the cloud database and/or data processing means.
The plant cultivation device itself contains one or more imaging devices (cameras) which are able to image the surface of the rack and capsules and upload the images to the cloud storage for further analysis. The user typically pairs his user account with the cultivation device and registers the cultivation device to a system.

### Microgreen registration:

The registration of microgreens is one of main use cases for the system. The registration of a microgreen is done via a web or mobile application with the use of a camera. Each microgreen capsule has a QR code containing initial metadata attached. The QR data may contain, for example, a plant type identifier and a unique alphanumeric code, which helps to identify data that are uploaded to the cloud platform. With the use of the web or mobile application, the user scans the QR code attached to the microgreen capsule. After a successful scan, the application decodes the QR code content and displays the information about the plant type and its description. The capsule is registered to the system under the user's account and the user is requested to water the microgreen capsule according to the user guide on the cover of the capsule. Each capsule is paired initially with the cultivation device, so the data processing means looks for this capsule in the corresponding plant cultivation device.

### Microgreen growth analysis:

The microgreen capsule growth analysis starts right after the microgreen capsule registration. Right after the registration and watering of the capsule, the system starts the germination time period countdown (the period depends on the plant type). After the period expires, the system notifies the user via the application or email that the sealing film of the microgreen capsule needs to be removed to let the microgreen grow. Analysis of growth status starts right after the capsule sealing film is removed and the capsule is placed into the plant cultivation device, i.e., into the visual field of the camera of the cultivation device. The cultivation device periodically takes camera images of the microgreen capsules and after image corrections uploads the image data to cloud storage. In some embodiments, each image contains up to four microgreen capsules. The cloud database or the data processing means keep track of unprocessed images and stores the metadata in a relational database. The data are then provided to the data processing means for image data analysis.
The data processing means first post-process the raw image data by color and contrast correction. The image is separated into sections, for example four quadrants, based on the layout of the surface in the visual field of the cultivation device camera. The quadrants then should contain an image with microgreen capsule and - if possible - with visible QR code that is used to identify the plant during its lifecycle. The growth analysis is then based on the color of pixels and its ratio in the image. The stage of microgreen readiness for harvest is classified by the neural network engine. These additional analysis data are stored back to the relational database, so the application can inform the user of the microgreen capsule status. Finally the application is then capable, based on the growth analysis, to notify the user about the life phases of the microgreen.

## Claims

1. An indoor plant cultivation device comprising at least one cultivation unit,
wherein said cultivation unit contains:
- a rack with at least one position fixing element for receiving and positioning a plant cultivation capsule;
- a support on which at least one imaging device is mounted;
- at least one plant cultivation capsule positioned within or using the at least one position fixing element wherein the plant cultivation capsule is provided with at least one computer-readable code positioned to be readable by the imaging device at least during the initialization of cultivation and with at least one computer-readable color standard positioned to be readable by the imaging device, and wherein the plant cultivation capsule contains a water-holding layer, a water-guiding layer, and a plant-seed containing layer;
- data transmission means.

2. The indoor plant cultivation device according to claim 1, wherein the position fixing elements are recesses and/or protrusions, wherein the recesses are recesses for receiving the outer shape of the capsule, or recesses for receiving protrusions formed on the capsule, and wherein the protrusions are configured to fit recesses formed in the capsule.

3. The indoor plant cultivation device according to any one of the preceding claims, wherein the rack is detachable and removable from the cultivation unit.

4. The indoor plant cultivation device according to any one of the preceding claims, wherein the support is positioned in relation to the rack so that the at least one imaging device images the content of all positions defined by position fixing elements in the rack, wherein one or more imaging devices image the content of all positions defined by position fixing elements in one image or in a plurality of separate images.

5. The indoor plant cultivation device according to any one of the preceding claims, wherein the imaging device(s) is(are) preferably mounted movably on the support.

6. The indoor plant cultivation device according to any one of the preceding claims, wherein the cultivation device contains more than one cultivation unit, and wherein the cultivation units repositioned on top of each other, and the lower side of one rack acts as a support for the imaging device for the rack positioned just below the said rack.

7. The indoor plant cultivation device according to any one of the preceding claims, wherein at least one light source is mounted to the support. The light source is position on the support in relation to the rack so that the one or more light sources emit light towards the rack. The light source(s) may be mounted movably on the support.

8. The indoor plant cultivation device according to any one of the preceding claims, wherein at least one sensor is mounted on the support, said sensor being selected from temperature sensors, light sensors, humidity sensors.

9. The indoor plant cultivation device according to any one of the preceding claims, wherein the support has at least one portion which is parallel to the rack, wherein the imaging device(s) and optionally the light source(s) are mounted on this parallel portion, and
the support has at least one portion connecting the parallel portion with the rack,
wherein preferably, the connecting portion(s) and the parallel portion are formed integrally and fixedly or removably mounted to the rack..

10. A plant cultivation capsule, which is provided with at least one computer-readable code positioned to be readable by the imaging device at least during the initialization of cultivation and with at least one computer-readable color standard positioned to be readable by the imaging device,
wherein the plant cultivation capsule contains, from bottom to top, a water-holding layer, a water-guiding layer, and a plant-seed containing layer, and
wherein the plant cultivation capsule is sealed by a sealing film.

11. The plant cultivation capsule according to claim 10, wherein the sealing film has a resealable portion allowing the user to pour water which directly accesses the water-holding layer, wherein the resealable portion corresponds to at most 20 % of the area of the sealing film, and
alternatively or additionally, the sealing film has a designated spot to be perforated for allowing the user to pour water which directly accesses the water-holding layer.

12. The plant cultivation capsule according to any one of claims 10-11, wherein the bottom of the capsule which is the side opposite the sealing film, contains at least three, preferably four or more, structures which are formed as recesses from the outer side and protrusions from the inner side of the bottom of the capsule.

13. The plant cultivation capsule according to any one of claims 10-12, wherein the plant cultivation capsule is made of plastic, preferably from polyvinyl chloride (PVC), polyethylene terephthalate (PET) or polylactic acid (PLA).

14. An indoor plant cultivation system comprising:
- the indoor plant cultivation device according to any one of the claims 1 to 9;
- at least one database containing images and data for past cultivations of the same plant species; and
- data processing means configured to compare the images and optionally further data obtained from the data transmission means with images and data for past cultivations of the same plant species stored in the database and to assess plant health, plant growing parameters and to determine the day of harvest.

15. A method for indoor cultivation of plants by a user, using the plant cultivation device according to any one of the claims 1 to 9 and/or system according to claim 14, comprising the following steps:
- providing an indoor plant cultivation device with at least one plant cultivation capsule;
- providing a mobile application on user's mobile phone;
- reading the computer-readable code from the plant cultivation capsule by means of the user's mobile phone or by means of an imaging device and uploading the information from the computer-readable code to the mobile application and/or to a database;
- removing a resealable portion of a sealing film of the plant cultivation capsule or perforating the sealing film at a designated spot, thus forming an opening in the sealing film, and pouring a pre-determined amount of water which is sufficient to support the plants until they are harvested into the plant cultivation capsule through the opening; optionally resealing the sealing film; and maintaining the capsule for a germination period of the contained seeds;
removing the sealing film from the plant cultivation capsule after germination period (typically about 2 days), preferably including providing a prompt to remove the sealing film to the user through the mobile application;
- placing the plant cultivation capsule within or using a position fixing element in a rack of the indoor plant cultivation device;
- optionally emitting light from light source(s) of the indoor plant cultivation device on the plant cultivation capsule.
- collecting images of the plant cultivation capsule in regular intervals by means of an imaging device of the indoor plant cultivation device, and optionally collecting further data, such as temperature and/or light and/or humidity data, by means of sensors; and transmitting the collected data to the mobile application or to the database and/or data processing means;
- comparing the images and optionally further data with images and data for past cultivations of the same plant species stored in the database in order to assess plant health, plant growing parameters and to determine the day of harvest;
- in regular intervals or upon user's request, informing the user through the mobile application about at least one of: the plant health, plant growing parameters and the estimated day of harvest of the plants within the plant cultivation capsule.
